# EUROPEAN PATENT APPLICATION

(11) **EP 4 464 673 A1**
(43) Date of publication of application: **20.11.2024**
(21) Application number: 23174026.7
(22) Date of filing: 17.05.2023
(51) Int. Cl.: C03C 1/00, C03C 1/02, C03C 3/087

(54) **RAW MATERIAL WITH LOW DUST AND IMPROVED REACTIVITY FOR USE IN GLASS MANUFACTURING**

(71) Applicant: S.A. LHOIST RECHERCHE ET DEVELOPPEMENT, 1342 Ottignies-Louvain-la-Neuve (BE)
(72) Inventor: LORGOUILLOUX, Marion, 7110 Stépy Bracquenies (BE); CRINIERE, Guillaume, 1420 Braine L'Alleud (BE); MILNER, Marc, Fort Worth, Texas 76132 (US); MAAZOUN, Mehdi, 1640 Rhodes-Saint-Genèse (BE)
(74) Representative: Calysta NV

(57) **Abstract**

The invention relates to an advantageous composition for its use as a glass raw material comprising (i) hydrated lime and limestone; or (ii) hydrated dolime and dolomite; or (iii) hydrated lime, hydrated dolime, limestone and dolomite; in such amounts that it comprises 25-70 wt% CoO, 0-30 wt% MgO, 10-45 wt% CO₂ and 1-20 wt% of bound water. The invention also relates to the use of said composition in a glass batch, to a process of preparing a glass batch and to the use of said glass batch in glass manufacturing.

## Description

### Technical Field

The present invention is in the context of the glass industry and, in particular, in the domain of glass manufacturing which includes melting a glass batch (or a mixture of raw materials) in a glass furnace following by a fining in order to produce glass articles, like glasswares, glass sheets or glass containers.

In particular, the invention relates to a composition that is particularly valuable as a calcium or calcium-magnesium source for its use as raw material in a glass batch and that allows reducing CO₂ emissions (lower CO₂ footprint) while properly addressing the issues of dust emissions during the glass batch preparation, its handling and its transport.

The present invention also relates to the particular use of said composition in a glass manufacturing process, and to a process of preparing a glass batch.

### Prior art

Glass articles, in particular silicious or soda-lime glass articles, are made commonly by melting at high temperatures (e.g. 1200-1500°C) a glass batch comprising mainly silica sand, limestone (i.e. calcium carbonate) and/or dolomite, sometimes called dolostone (i.e. calcium-magnesium carbonate), and soda ash (i.e. sodium carbonate). Depending notably on the glass furnace, the targeted properties and use of the final glass produced, the glass batch comprises these main raw materials in variable amounts and generally, it also comprises other raw materials in smaller amounts like, for example, potassium, aluminum, lead, magnesium and/or boron source(s), cullet, and additive(s) (coke, sulphates,...).

As conventional glass melting processes have used for decades essentially carbonates as sources of sodium, calcium and magnesium, glass industry is considered as an important direct emitter of CO₂ occurring from the decarbonization of these raw materials during the melting/fining.

Next to that, the glass manufacturing process is also greatly energy-demanding, to melt the solid glass batch and maintain the melt at high temperatures for fining, thereby generating also indirect CO₂ emissions.

Though, the global warming, the requirements for CO₂ emissions reduction, CO₂ taxes and the energy prices have put more and more pressure on glass manufacturers and represent a current or future threat in the glass business competitivity. In that context, the glass industry has invested a lot since years in developments and actions in order to reduce energy consumption and/or CO₂ emissions of its manufacturing processes.

One of the levers identified to reduce the direct and indirect CO₂ emissions per ton of produced glass relies on the use of alternative raw materials, in particular the replacement of carbonates by a corresponding decarbonated material. In particular, it is known in the art to replace limestone (i.e. calcium carbonate) by its corresponding oxide (quicklime, i.e. CaO). It is also known, but in a lesser extent, to replace dolomite (i.e. calcium and magnesium carbonate) by its corresponding oxide (dolime, i.e. CaO.MgO).

The main advantage with the use of limestone and/or dolomite as calcium and/or calcium-magnesium source in a glass batch, next to their low costs, is the fact that these products have high densities and show rather coarse grains (up to 3 or even 5 mm) and therefore emit very limited amounts of dust during handling, mixing with the other glass batch raw materials, transport through conveyors, introduction in the furnace, etc. Moreover, limestone and dolomite are inert in the presence of water, meaning that if the glass manufacturer anyhow wishes to further decrease dust emissions, the batch can be moisturized without any issue (in particular, without any chemical reactions).

Replacing limestone by quicklime (or dolomite by dolime, or both) in a glass batch may at first sight not seem to be a solution to reduce CO₂ emissions as the CO₂ from the limestone and/or dolomite will anyway be released, as quicklime and dolime are manufactured by burning limestone or dolostone in a furnace called commonly "lime kiln" where the carbonates are converted into oxides and CO₂. However, it is known in the art that the energy efficiency of a lime kiln is higher than that of a glass furnace, meaning that the energy required to decompose 1 ton of limestone or dolostone will be lower in a lime kiln than in a glass furnace, which implies consequently less CO₂ emissions from fuels.

Moreover, it appears that the melting (and fining) kinetics of a glass batch made with quicklime and/or dolime as calcium and/or calcium and magnesium source is increased compared to that of a glass batch made with limestone and/or dolostone. This means that, in a given glass furnace at a given temperature, the pull can be increased and therefore, the energy consumption as well as the CO₂ emitted per ton of glass can be decreased. Nevertheless, replacing limestone by quicklime and/or dolostone by dolime in a glass batch leads to other issues, particularly related to their reactivity with water.

The particle size of quicklime and/or dolime can be adjusted by several means (milling, screening, classification...) in order to manufacture a product that is low in terms of dust emissions. However, quicklime and dolime have a lower mechanical resistance that limestone and dolostone, and therefore, after their manufacturing with a well-controlled particle size, they are prone to generate more fines during transport, handling, loading... than limestone and dolostone, which results in the end, especially upon arrival at customer site, to increased dust emissions. In a glass manufacturing process, dust is potentially emitted during the preparation of the batch, in the conveying circuits upstream of the furnace, when the batch is introduced into the furnace, but also in the furnace itself. Dust emission may therefore have an impact at different locations and generates adverse effects like losses of raw materials, pilling-up/clogging of the fumes ducts and heat exchangers, reducing the lifetime of the refractories, cleaning requirements, need of dust removal circuits, health hazard for workers, etc.

Glass batch moisturization is a very common practice to reduce dust emissions in general in the glass industry (and also avoid segregation during batch storage). However, water and quicklime react together exothermically, which results in a release of heat that makes the batch difficult to handle. Moreover, this hydration reaction generates calcium hydroxide particles that have a smaller granulometry than the initial oxide and leads thus to the generation of additional fine particles and increased dust emissions. Moreover, the lime hydration reaction consumes water that is therefore not present anymore as free moisture in the batch, and that can thus not play its role of dust suppressant for the other raw materials in the batch.

The issue of quicklime reactivity with water could be solved by using hydrated lime (Ca(OH)₂) instead but this solution has not been adopted in the art because hydrated lime is known to have a smaller granulometry than quicklime and therefore to emit more dust.

Several solutions to the above issues when replacing limestone by quicklime have been proposed in the art. They all consider the total replacement of limestone by quicklime combined with other specific aspects concerning the manufacturing process and/or adapted features of the quicklime itself. Quicklime, which the chemical composition is mainly calcium oxide, CaO, is usually obtained by calcination of limestone (mainly CaCO₃).

Hence, in document US4028131, it is proposed to totally replace limestone by quicklime or "burnt lime" (CaO) and combine it with a specific amount of caustic soda (e.g. a 70% concentrated solution at 80°C) in the glass batch. According to US4028131, there is a synergistic effect of the use of quicklime with caustic soda, which reduces the disadvantage arising from the use on fine powders of quicklime, does not require sizing of the material and allows an increase in speed of fusion and fining. However, the use of concentrated solution of caustic soda brings some drawbacks and should be avoided, when possible, in industrial process.

In document WO2019/002802A1, it is proposed to totally replace limestone by quicklime in a glass batch together with a specific feature of the process. Hence, WO2019/002802A1 discloses a process for manufacturing glass comprising the preparation of a glass batch, in which water, sand and sodium carbonate are mixed in specific proportions and, after a delay (e.g. a time of at least 10 minutes or preferably at least one hour), calcium oxide is added to the batch. According to the applicant, such a specific process allows to decrease energy consumption, amount of CO₂ release. Moreover, issues regarding batch dust are also reduced (the initial particle size of the constituents introduced into the batch would be substantially conserved). However, delaying the addition of a specific raw material (by one hour, for example) compared to the others represents an additionnal operational burden for the glass workers and a delay of the overall process.

Next to that, it is to be noted that replacing dolomite by its corresponding oxide (dolime) leads to the same issues as those explained in relation with the replacement of limestone by qucklime, and that the issues of too fine particle size mentionned earlier in the case of the use of hydrated lime would be encoutered as well if hydrated dolime (Ca(OH)₂.xMg(OH)₂.(1-x)MgO, with 0 ≤ x ≤ 1) would be used to replace dolostone/dolomite.

Therefore, in the current environmental and economical situation, there is still a need in the glass industry to provide an alternative calcium or calcium-magnesium raw material having and/or leading to reduced CO₂ emissions while having a low dust emission during its handling, transportation and storage, either alone or in a glass batch, and which is simple and easy to use. For example, there is a need for an alternative calcium or calcium-magnesium raw material that does not need (i) the use of a corrosive additive like NaOH and/or (ii) the sequenced addition of raw materials in the batch/furnace.

### Objectives of the invention

The present invention has notably the objective of overcoming the cited drawbacks of the prior art.

More precisely, an objective of the invention is to provide an alternative raw material for calcium or calcium-magnesium, that is valuable in a glass batch to be introduced in a glass manufacturing/melting process.

In particular, an objective of the invention is to provide a calcium or calcium-magnesium raw material that has a low dust emission, in particular during its handling, its transportation and its storage, either alone or in a glass batch.

Another objective of the invention is to provide a calcium or calcium-magnesium raw material that, when added in a glass batch, allows reducing the CO₂ emission of the glass manufacturing process by ton of glass produced.

Still another objective of the invention is to provide a calcium or calcium-magnesium raw material that, when added in a glass batch, allows increasing energy efficiency and improve the kinetics of the glass manufacturing process.

Finally, another objective of the invention is to provide a solution to the disadvantages of the prior art that is simple and cheap to manufacture and use.

### Description of the invention

The invention relates to a composition for its use as a raw material in a glass manufacturing process, comprising :
- hydrated lime and limestone; or
- hydrated dolime and dolomite; or
- hydrated lime, hydrated dolime, limestone and dolomite;
in such amounts that said composition comprises :
- 25 to 70 wt% of total calcium (expressed as CaO);
- 0 to 30 wt% of magnesium (expressed as MgO);
- 10 to 45 wt% of total carbonate (expressed as CO₂);
- 1 to 20 wt% of bound water (expressed as H₂O).

The invention also relates to the use of said composition, as a calcium or calcium-magnesium raw material in a glass manufacturing process.

The invention also relates to a process of preparing a glass batch from glass raw materials, comprising a step of mixing the following raw materials to obtain said glass batch:
- silica sand,
- soda ash (namely sodium carbonate or Na₂CO₃),
- calcium and calcium-magnesium sources chosen amongst the following combinations:
   - hydrated lime and limestone and dolomite; or
   - hydrated dolime and dolomite and limestone; or
   - hydrated lime, hydrated dolime, limestone and dolomite;
- optionally, one or more secondary raw materials;
the amounts of hydrated compound(s) (HC) and carbonate compound(s) (CC) in said glass batch being such that the weight ratio HC/CC ranges between 0.03 to 3, HC being defined as hydrated lime and/or hydrated dolime and CC being defined as limestone and dolomite.

The invention also relates to the use of the glass batch prepared according to the process of the invention, to feed a glass furnace.

Hence, the invention is based on a novel and inventive approach. In particular, the inventors have evidenced that, by combining hydrated compound(s) (hydrated lime and/or hydrated dolime) and carbonate compound(s) (limestone and/or dolomite) in a glass raw material in specific relative amounts, it is possible to reach a low dust emission during handling, transportation and storage, either alone or in a glass batch, despite the use of hydroxides. In particular, the inventors have found that this is especially advantageous when limestone is replaced partially by hydrated lime and/or when dolomite is partially replaced by hydrated dolime.

It has been surprisingly observed that the dust emissions of a mixture of carbonate(s) and hydroxide(s) in specific amounts and associations (hydrated lime with limestone from on side, and/or hydrated dolime with dolomite, from the other side) are lower than or close to those of corresponding carbonates and hydroxides taken separately. This synergy is moreover also observed when such composition is added in a glass batch with the other raw materials and also when both carbonate(s) and hydroxide(s), taken separately, are blended in a glass batch with the other raw materials.

The advantageous effect of the invention on dust emissions allows the use of hydroxide(s) of calcium and/or magnesium (hydrated lime, hydrated dolime) in large amounts as a partial replacement of carbonate(s) of calcium and/or magnesium (limestone, dolomite), without having the drawbacks usually associated with the use of oxides or hydroxides exposed above and while having the added value of using hydrated products instead of carbonated ones (reduced CO₂ emissions, increased pull, due to increased melting kinetics, ...).

In the present specification and claims, it is well understood by the person skilled in the art that, as used herein the terms "a", "an" or "the" means at least "one" and should not be limited to "only one" unless explicitly indicated to the contrary. Also, when a range is indicated, the extremities are included. In addition, all the integral and subdomain values in the numerical range are expressly included as if explicitly written. Also, throughout the specification and claims, the values of content in compositions/glass batches are as percentages by weight, that is to say expressed with respect to the total weight of the composition/glass batch, unless explicitly specified otherwise.

According to the invention, the composition of the invention is particularly advantageous as a raw material in a glass manufacturing process, in particular as a calcium or as a calcium-magnesium raw material.

By "glass manufacturing process" and as commonly adopted in the art, it is intended a process that allows manufacturing glass articles like glasswares, glass sheets or glass containers, through melting of a glass batch comprising raw materials in a glass furnace.

The composition of the invention comprises:
- hydrated lime and limestone; or
- hydrated dolime and dolomite; or
- hydrated lime, hydrated dolime, limestone and dolomite.

For the sake of clarity, when said composition is used in a glass batch, this means that:
- when the composition of the invention comprises hydrated lime and limestone, limestone will been replaced partially in the glass batch by hydrated lime;
- when the composition of the invention comprises hydrated dolime and dolomite, dolomite will been replaced partially in the glass batch by hydrated dolime;
- when the composition of the invention comprises hydrated lime, hydrated dolime, limestone and dolomite, limestone will been replaced partially by hydrated lime and that dolomite will be replaced partially in the glass batch by hydrated dolime.

For the sake of clarity also, when the composition of the invention comprises hydrated lime and limestone, said composition is advantageous as a calcium raw material. When the composition of the invention comprises hydrated dolime and dolomite or hydrated lime, hydrated dolime, limestone and dolomite, it is advantageous as a calcium-magnesium raw material.

Possibly and alternatively, the composition may comprise the following combinations, even if less preferred :
- hydrated lime and dolomite, or
- hydrated dolime and limestone, or
- hydrated lime and hydrated dolime and dolomite,
- hydrated lime and hydrated dolime and limestone, or
- hydrated dolime and limestone and dolomite, or
- hydrated lime and limestone and dolomite.

By "limestone", as commonly adopted in the art, it is meant herein calcium carbonate of the formula CaCO₃. It may commonly comprise some impurities, present in the limestone minerals. Those impurities will be also present in the derived quicklime and, consequently, in the hydrated lime (together with the main component Ca(OH)₂).

By "dolomite", also called "dolostone", as commonly adopted in the art, it is meant herein calcium magnesium carbonate of the formula CaMg(CO₃)₂. It may commonly comprise some impurities, present in the dolomite minerals. Those impurities will be also present in the derived compounds, as for the limestone.

By "hydrated lime", also called "slaked lime", as commonly adopted in the art, it is meant herein calcium hydroxide of the formula Ca(OH)₂, which is commonly the industrial result of the slaking process of quicklime with water (also called hydration). It may commonly comprise some impurities, present in the initial limestone minerals from which it derives and its calcination process (e.g. contamination from the fuel).

By "hydrated dolime", also called "slaked dolime", as commonly adopted in the art, it is meant herein an hydroxide of calcium-magnesium, where calcium is essentially fully in its hydrated/hydroxide form and the magnesium is essentially fully or partially in its hydrated/hydroxide form, of the formula [Ca(OH)₂.xMg(OH)₂.(1-x)MgO] with x = 0 to 1. "Hydrated dolime" is commonly the industrial result of the slaking process of dolime with water (also called hydration), that can be done at atmospheric pressure or with some pressure in an autoclave. When the magnesium is partially in its hydrated/hydroxide form, the product is sometimes called "partially hydrated dolime". It may commonly comprise some impurities, present in the initial dolostone minerals from which it derives and its calcination process (e.g. contamination from the fuel).

The amount of "bound water" (expressed as H₂O) according to the invention means herein the hydroxide content in the composition as measured by loss on ignition (or LOI) between 350°C and 550°C.

The amount of total carbonate (expressed as CO₂) according to the invention means herein the carbonate content in the composition as measured by loss on ignition (or LOI) between 550°C and 950°C.

The LOI, in order to determine the amount of bound water and carbonate in the invention, could be obtained commonly using thermogravimetric analysis (TGA) performed by gradually raising the temperature of a sample of the composition, at a rate of 5°C/min from room temperature to at least 950°C (or to constant mass) in a furnace under a flow of nitrogen, as its weight is measured on an analytical scale. The weight of the sample is plotted against temperature to observe thermal transitions/decompositions that occur upon raising temperature. The hydrated compound(s) comprised in the composition of the invention decompose(s) between 350°C and 550°C by releasing water (then called "bound water"). The mass loss occuring between 350°C and 550°C corresponds therefore to the amount of "bound water" (expressed as H₂O) according to the invention. The carbonate compound(s) comprised in the composition of the invention decompose(s) between 550°C and 950°C (or constant mass) by releasing CO₂. The mass loss occuring between 550°C and 950°C (or constant mass) corresponds therefore to the amount of total carbonate (expressed as CO₂) according to the invention.

According to an embodiment of the invention, the composition comprises from 0.1 to 5 wt% of free water (expressed as H₂O). Preferably, the composition comprises from 0.3 wt% of free water, more preferably, from 0.5 wt% of free water. Preferably also, the composition comprises up to 4 wt% of free water, more preferably, up to 3 wt% or up to 2 wt% and even, up to 1.5 wt%. Preferably also, the composition comprises 0.3 to 3 wt% and, more preferably, 0.5 to 1.5 wt%.

By "free water" in the invention, it is meant water that is present as such in the composition (not in the form of hydroxide groups), as crystalline water and/or as adsorption water and/or as water brought by moisturization. The amount of free water according to the invention corresponds herein to the water content in the composition as measured by loss on ignition (or LOI) below 150°C. The free water, if comprised in the composition of the invention, is released below 150°C and the mass loss occuring below 150°C corresponds therefore to the amount of free water (expressed as H₂O) according to the invention.

In the case of moisturization of the composition of the invention, water can be added to the composition upon mixing, but a milk of lime and/or a milk of dolime may also be used. By "milk of lime" or "milk of dolime" as commonly adopted in the art, it is meant an aqueous slurry of "hydrated lime" or "hydrated dolime", respectively, that can be obtained by slaking "quicklime" or "dolime" with an excess of water or by slurrying "hydrated lime" or "hydrated dolime" in water. Milks of lime or dolime can have a solid content from 5 to 50 %, the rest being water, and may contain some (organic) additives that stabilize their viscosity and/or avoid the settling of the particles. Even in the case of moisturization of the composition by a milk of lime or a milk of dolime instead of water, the composition comprises from 0.1 to 5 wt% of free water (expressed as H₂O).

According to a preferred embodiment, the composition of the invention shows a dust emission defined by a Dust Area (a.u.) below 600, preferably below 500, more preferably below 450, below 400, below 350 or below 300, as measured on an amount of 50 grams of composition in a dry state and with a measurement time of 30 seconds. By composition in a dry state, it is meant herein the composition, as prepared, without adding external water. In a very preferred mode, the composition of the invention shows a dust emission defined by a Dust Area (a.u.) below 250, preferably below 200, more preferably, below 150 or even below 100, as measured on an amount of 50 grams of composition in a dry state and with a measurement time of 30 seconds. This is adavantageous as this means that the composition of the invention in a dry state has an acceptable to a very good behaviour in terms of dust emissions.

According to a preferred embodiment, the composition of the invention comprises hydrated lime and limestone in such amounts that said composition comprises:
- 50 to 70 wt% of total calcium (expressed as CaO);
- 0 to 5 wt% of magnesium (expressed as MgO);
- 10 to 40 wt% of total carbonate (expressed as CO₂);
- 1 to 20 wt% of bound water.

According to this preferred embodiment, the composition comprises preferably from 55 wt% of total calcium, more preferably, from 58 wt% of total calcium. Moreover, the composition may comprise up to 65 wt% of total calcium, or up to 62 wt% of total calcium. Still according to this preferred embodiment, the composition may comprise from 15 wt% of total carbonate (expressed as CO₂), or from 20 wt% of total carbonate. Moreover, the composition may comprise up to 35 wt% of total carbonate (expressed as CO₂), or up to 30 wt% of total carbonate. Still according to this preferred embodiment, the composition comprises from 2 wt% of bound water (expressed as H₂O), more preferably, from 7 wt% of bound water. Moreover, the composition may comprise up to 17 wt% of bound water (expressed as H₂O), or up to 15 wt% or even up to 12 wt% of bound water.

According to an aternative preferred embodiment, the composition comprises hydrated dolime and dolomite in such amounts that said composition :
- 25 to 40 wt% of total calcium (expressed as CaO);
- 20 to 30 wt% of magnesium (expressed as MgO);
- 10 to 45 wt% of total carbonate (expressed as CO₂);
- 1 to 20 wt% of bound water (expressed as H₂O).

According to this alternative embodiment, the composition comprises preferably from 30 wt% of total calcium (expressed as CaO) and, more preferably, from 35 wt%. Still according to this alternative embodiment, the composition comprises preferably from 22 wt% of total magnesium (expressed as MgO) and more preferably, from 26 wt%. Still according to this alternative embodiment, the composition comprises preferably up to 35 wt% of total carbonate (expressed as CO₂) and more preferably, up to 30 wt%. Still according to this alternative embodiment, the composition comprises preferably from 2 wt%, more preferably from 7 wt% of bound water (expressed as H₂O).

According to another aternative preferred embodiment, the composition comprises hydrated lime, hydrated dolime, limestone and dolomite in such amounts that said composition comprises:
- 25 to 70 wt% of total calcium (expressed as CaO);
- 1 to 30 wt% of magnesium (expressed as MgO);
- 10 to 45 wt% of total carbonate (expressed as CO₂);
- 1 to 20 wt% of bound water (expressed as H₂O).

According to this alternative embodiment, the composition comprises preferably from 30 wt% of total calcium (expressed as CaO) and more preferably, from 40 wt%. Still according to this alternative embodiment, the composition comprises preferably from 5 or 10 wt% of total magnesium (expressed as MgO) and more preferably, from 20 wt%. Still according to this alternative embodiment, the composition comprises preferably up to 35 wt% of total carbonate (expressed as CO₂) and more preferably, up to 30 wt%. Still according to this alternative embodiment, the composition comprises from 2 wt%, from 7 wt% of bound water (expressed as H₂O).

Preferably, the composition of the invention comprises less than 2000 ppm, preferably less than 1800 ppm and, more preferably, less than 1500 ppm of iron (expressed as Fe₂O₃). This is adavantageous as the glass manufacturers generally seek to avoid iron as much as possible in many glass articles, due to its high coloring power even at very low amounts.

Preferably also, the composition of the invention has a maximum particle size of 8 mm, more preferably 5 mm and, even, 3 mm. By "maximum particle size" in the sense of the invention, it is meant the mesh size of a screen through which more than 97%, preferably more than 98% and more preferably more than 99% of the composition can pass.

The composition of the invention may be prepared according to known methods in the art appropriate to blend solid raw materials. The composition may be moisturized with water or a milk of lime or a milk of dolime according to known methods in the art, like typically the ones used by glass makers to moisturize the glass batch. Such moisturization helps decrease further the dust emissions and avoid segregation of the hydrated compound(s) and carbonate compound(s) compounds during storage or transport of the composition.

Moreover, the invention also relates to the use of said composition, as a calcium or calcium-magnesium raw material in a glass manufacturing process. This is very advantageous as this use allows to reduce CO₂ emissions of the glass manufacturing process, to increase its pull (due to increased melting kinetics) while keeping dust emissions at acceptable levels despite the (partial) replacement of carbonate(s) by corresponding hydroxide(s). According to this use, the composition of the invention is added, as a raw material, to a glass batch, for example and as commonly known in the art, through a glass batch mixer, without any limitation regarding the way and the order of adding the raw materials, namely the composition of the invention and the other raw materials.

The invention also relates to a process of preparing a glass batch from glass raw materials, comprising a step of mixing the following raw materials to obtain said glass batch:
- silica sand,
- soda ash (namely sodium carbonate or Na₂CO₃),
- calcium and calcium-magnesium sources chosen amongst the following combinations:
   - hydrated lime and limestone and dolomite; or
   - hydrated dolime and dolomite and limestone; or
   - hydrated lime, hydrated dolime, limestone and dolomite;
- optionally, one or more secondary raw materials;
the amounts of hydrated compound(s) (HC) and carbonate compound(s) (CC) in said glass batch being such that the weight ratio HC/CC ranges between 0.03 to 3, HC being defined as hydrated lime and/or hydrated dolime and CC being defined as limestone and dolomite.

According to the invention, when limestone is replaced partially in the glass batch by hydrated lime, the glass batch also comprise dolomite to bring magnesium. In such a case, the glass batch then comprises hydrated lime and limestone and dolomite.

According to the invention, when dolomite is replaced partially in the glass batch by hydrated dolime, the glass batch also comprise limestone to bring calcium in a sufficient amount. In such a case, the glass batch then comprises hydrated dolime and dolomite and limestone.

According to the invention, when (i) limestone is replaced partially in the glass batch by hydrated lime and (ii) dolomite is replaced partially by hydrated dolime, the glass batch then comprises hydrated lime, hydrated dolime, limestone and dolomite.

According to the invention, there is no limitation regarding the way and the order of mixing the raw materials. The raw materials may be blended by any appropriate method known in the art and in the order the most suitable for the glass manufacturer taking into account, for example, the existing installation or other requirement(s). In particular, the step of mixing according to the invention may be implemented commonly by adding said raw materials into a glass batch mixer, in the appropriate order and with the appropriate tools (storing silos, dosing means, conveying means, etc.).

For example, the hydrated compound(s) and the carbonate compound(s) according to the invention may be added into the glass batch mixer, together or independently. Hence, the hydrated compound(s) and the carbonate compound(s) may be blended (partially or totally) before being introduced into the glass batch mixer. As an example of partial blending, if the raw materials to be added comprise hydrated lime, limestone and dolomite, hydrated lime and limestone may be blended before being introduced into the mixer while dolomite is introduced independently. Alternatively, the hydrated compound(s) and the carbonate compound(s) may be each introduced into the glass batch mixer independently in any appropriate order (then stored upstream of the mixer in separate silos). In such a case, the hydrated compound(s) may be added before the carbonate compound(s) or the opposite, possibly, by layers in the batch mixer. In such a case also, they may be added into the batch mixer with one dosing and conveying system for each. Alternatively, they may be dosed independently but then transported by the same conveying system (two or more dosing systems feeding the same conveying system).

Preferably, the amounts of hydrated compound(s) (HC) and carbonate compound(s) (CC) in said glass batch are such that the weight ratio HC/CC is from 0.08 or more preferably, from 0.10 or even from 0.20 or 0.30. Preferably also, the amounts of hydrated compound(s) (HC) and carbonate compound(s) (CC) in said glass batch are such that the weight ratio HC/CC is up to 2 or more preferably, up to 1.5 or even up to 1.

Preferably, said glass batch has a dust emission defined by a Dust Area (a.u.) below 250, preferably below 200 and, more preferably, below 150, as measured on 100 g of said glass batch in a dry state (taken before any moisturization) and with a measurement time of 30 seconds. This is adavantageous as this means that the glass batch prepared according to the process of the invention shows a dust emission that is quivalent to or even lower than the one of a glass batch of similar chemical composition (in equivalent oxides) classically prepared with limestone and/or dolomite as the main calcium/magnesium source(s). By glass batch in a dry state, it is meant herein the composition, as prepared, without adding external water.

According to the invention and depending on the glass furnace and on the targeted glass (i.e. its desired properties in terms of chemical/mechanical resistance, colour,...), said optional one or more secondary raw material(s) may be chosen from the following non-exhasutive list : potash, salt cake (or sodium sulfate, Na₂SO₄), nephelin, feldspar, boron oxide, barium oxide, cullet, coloring agents (cobalt oxide, chromium oxide,...), clarifying agents (cerium oxide,..), oxidizers (sodium nitrate,...), reducing agents (graphite, coke, pyrite,...), decolorizing agents (selenium, cobalt,...).

According to an embodiment of the invention, the process comprises further a step of adding water in an amount ranging from above 0 to 5 wt% (expressed with respect to the total weight of said glass batch in a dry state). Preferably, the process comprises further a step of adding water in an amount ranging from 0.1 to 5 wt%. According to this embodiment, said water may be added through the addition of a a milk of lime and/or a milk of dolime in such amounts that one reaches the desired water amount (expressed with respect to the total weight of said glass batch in a dry state). The amount of milk of lime and/or milk of dolime that may be added to the glass batch depends therefore on its solid content. The higher the solid content, the higher the amount of milk may be added without going above 5 wt% of water added to the dry glass batch. In the case of the addition of a milk of lime and/or a milk of dolime to the dry glass batch, the chemical composition of the milk(s) must be known in order to adapt accordingly the dry glass batch composition. For instance, in the case of the addition of a milk of lime composed mainly of Ca(OH)₂, the amounts of limestone and/or hydrated lime in the glass batch must be slightly reduced.

This additionnal step of moisturization is advantageous as it allows to decrease further the dust emissions of the glass batch, without leading to exthermic reactions. In particular, directly after moisturization of said glass batch and up to 48h after said moisturization, the dust emissions of said glass batch is very low and the surprising synergistic effect of the invention, obtained by combined carbonate(s) and hydroxide(s), is accentuated.

In an advantageous embodiment, the glass batch prepared according to the process of the invention has a dust emission defined by a Dust Area (a.u.) below 100, preferably below 75 and, more preferably, below 50, as measured after 48 hours on 100 g of said glass batch in a wet state and with a measurement time of 30 seconds. By glass batch in a wet state, it is meant herein the glass batch in a dry state to which 3 wt% of water has been added. The measurement is carried out roughly 48 hours after adding water. In a very preferred embodiment, the glass batch has a dust emission defined by a Dust Area (a.u.) below 40, preferably below 25 and, more preferably, below 10, as measured after 48 hours on 100 g of said glass batch in a wet state and with a measurement time of 30 seconds. This is adavantageous as this means that the glass batch prepared according to the process of the invention, when moisturized, has an excellent behaviour in terms of dust emissions.

According to the invention, each of hydrated lime, hydrated dolime, limestone and dolomite are of good purity, i.e. compatible with glass manufacturing, but commonly contain impurities, for example phases derived from SiO₂, Al₂O₃, Fe₂O₃, MnO, P₂O₅, K₂O and/or SO₃, globally representing at maximum up to 10 wt%. Preferably, the sum of these impurities in each, expressed in the form of the aforementioned oxides, does not exceed 5 wt%, preferably 3 wt%, preferably 2 wt% or even 1 wt%. In particular, hydrated lime, hydrated dolime, limestone and/or dolomite in the invention may comprise advantageously less than 2000 ppm, preferably less than 1800 ppm, and more preferably less than 1500 ppm, or even less than 1000 ppm of iron, expressed as Fe₂O₃.

The hydrated lime according to the invention may also contain calcium oxide which would not have been hydrated during slaking. It may also contain calcium carbonate, CaCO₃, that would come either from the initial limestone from which the lime is initially derived ("unburnt"), or from a partial carbonation reaction of the hydrated lime in contact with air. The calcium oxide content in the hydrated lime in the context of the present invention is generally less than 20 wt%, preferably less than 10 wt% and more preferably less than 5 wt%. The total carbonate content in the hydrated lime, expressed as CO₂, is less than 10 wt%, preferably less than 5 wt% and more preferably less than 2.5 wt%. he hydrated lime of the invention may also contain magnesium oxide, MgO or derivative phases of Mg(OH)₂ or MgCOs, representing globally a few tens of grams per kilogram. The magnesium impurities in the hydrated lime in the context in the invention, expressed in the form of MgO, generally does not exceed 5 wt%.

The hydrated dolime of the invention may also contain calcium oxide which would not have been hydrated during slaking. It may also contain calcium and/or magnesium carbonate(s) that would come either from the initial dolomite from which the dolime is derived ("unburnt"), or from a partial carbonation reaction of the hydrated dolime in contact with air. The calcium oxide content in the hydrated dolime in the context of the present invention is generally less than 10 wt%, preferably less than 7 wt% and more preferably less than 3 wt%. The total carbonate content in the hydrated lime, expressed as CO₂, is less than 10 wt%, preferably less than 5 wt% and more preferably less than 2.5 wt%.

According to an embodiment of the invention, said hydrated compound(s) (namely, hydrated lime and/or hydrated dolime) comprise(s) free water between 0.1 and 2 wt%, preferably between 0.3 and 1.5 wt% and, more preferably, between 0.5 and 1 wt%.

According to another embodiment of the invention, said hydrated compound(s) has/have a d₅₀ ranging between 3 and 20 µm, preferably between 4 and 15 µm and, more preferably, between 5 and 10 µm.

According to still another embodiment of the invention, said hydrated compound(s) has/have a d₉₀ ranging between 20 and 100 µm, preferably between 25 and 80 µm and, more preferably, between 30 and 60 µm.

According to an embodiment of the invention, said carbonate compound(s) (namely, limestone and/or dolimite) comprise(s) free water between 0.1 and 1.5 wt%, preferably between 0.3 and 1.2 wt% and, more preferably, between 0.5 and 1 wt%.

According to still another embodiment of the invention, said carbonate compound(s) has/have a maximum particle size of 8 mm, preferably 5 mm and, more preferably, 3 mm.

It should be understood that the present invention is not limited to the described embodiments and that variations can be applied without going outside of the scope of the claims. It is further noted that the invention relates to all possible combinations of features, and preferred features, described herein and recited in the claims.

The following examples are provided for illustrative purpose and are not intended to limit the scope of this invention.

### Examples

Compositions according to the invention and glass batches according to the process of the invention were prepared at lab scale.

### Dust area evaluation

The advantages of the invention in terms of dust emissions were determined by measuring the known parameter called "Dust Area".

The Dust Area were measured with a Microtrac DustMon RD100 from Retsch. This equipment consists of a dosing control system (sample beaker with a valve and a tube), a sample collector, a light source and a detector. The solid sample to measure is poured into the sample beaker. On starting the measurement, the valve opens and the sample drops down the tube into the sample collector. The dust generated in the sample collector is then measured by the detector, based on the obscuration of the light source. In order to be able to compare values between each other, the amount of sample used for the analyses to be compared must be the same, from a sample to another.

The resulting dust concentration is plotted vs time to reach a curve. The analysis is done during 30 seconds with 1000 measurements per second. The area under said curve, called Dust Area, expressed in arbitrary units (a.u.) is determined as an evaluation of the level of dust emissions of the sample.

For the composition according to the invention and raw materials taken independently, the amount of sample used is 50 g, in a dry state (no water added). In such conditions, measurement error is about ± 5 %.

For the glass batches prepared according to the invention, the amount of sample used is fixed at 100 g in a dry state (no water added) or in a wet state (3 wt% water added), which allows to express the dust emissions per t of batch and to compare batches prepared with different sources of calcium or calcium-magnesium. In such conditions, measurement error is about ± 5 %.

### Set # 1

Three compositions 1-3 according to the invention were prepared by mixing in a known manner a hydrated lime (HL) and a milled limestone (LS) in various proportions and the dust area of these 3 compositions were measured according to the above described procedure, in a dry state.

Results for composition, Dust area and granulometry for those three compositions are given in Table 1.

**Table 1**

| | **Composition 1** | **Composition 2** | **Composition 3** |
|---|---|---|---|
| CaO (wt. %) | 58.1 | 61.7 | 65.9 |
| MgO (wt. %) | 0.58 | 0.55 | 0.59 |
| CO₂ (wt. %) | 38.2 | 31.5 | 23.3 |
| Bound water (wt. %) | 2.6 | 5.5 | 9.2 |
| Fe₂O₃ (ppm) | 490 | 520 | 390 |
| Dust area (a.u.) | 156.2 | 219.4 | 220.5 |
| Max size (mm) | 1 | 1 | 1 |

It is to be noted that the dust area value of the composition 3 is surprisingly very close to that of the composition 2 while one might have expected a significant increase as the composition 3 comprises more hydrated lime (see bound water value) than composition 2.

These compositions were then used as a raw material (i.e. source of Ca) to prepare glass batches. To do so, each composition was blended into a planetary mixer (max speed during 5 minutes) with silica sand, soda ash, nepheline syenite and sodium sulphate, as well with dolomite (to bring magnesium to the batch). In total, about 2 kg of every glass batch were prepared.

The targeted glass batch composition in this example corresponds to a typical container glass composition and is the following : 71.9 % SiO₂, 12.8 % Na₂O, 1.2 % K₂O, 10.7 % CaO, 1.4 % MgO, 1.8 % Al₂O₃, 0.08 % Fe₂O₃ and 0.12 % SO₃.

Table 2 gives the used amounts of sand, soda ash, dolomite, Ca source (LS or Composition 1 or 2 or 3 or HS), nepheline syenite and sodium sulphate to prepare glass batches.

**Table 2**

| | **Glass batch with LS** | **Glass batch with Composition 1** | **Glassbatch with Composition 2** | **Glass batch with Composition 3** | **Glass batch with HL** |
|---|---|---|---|---|---|
| Silica sand (g) | 1145.2 | 1152.9 | 1161.2 | 1170.4 | 1118.3 |
| Soda ash (g) | 355.8 | 358.3 | 361.0 | 364.0 | 367.8 |
| Dolomite (g) | 106.9 | 106.0 | 107.5 | 108.3 | 108.6 |
| **Ca source (g)** | **261.4** | **251.6** | **238.4** | **224.9** | **207.7** |
| Nepheline syenite (g) | 117.2 | 117.7 | 118.4 | 119.0 | 120.3 |
| Sodium sulphate (g) | 3.5 | 3.5 | 3.4 | 3.4 | 3.4 |

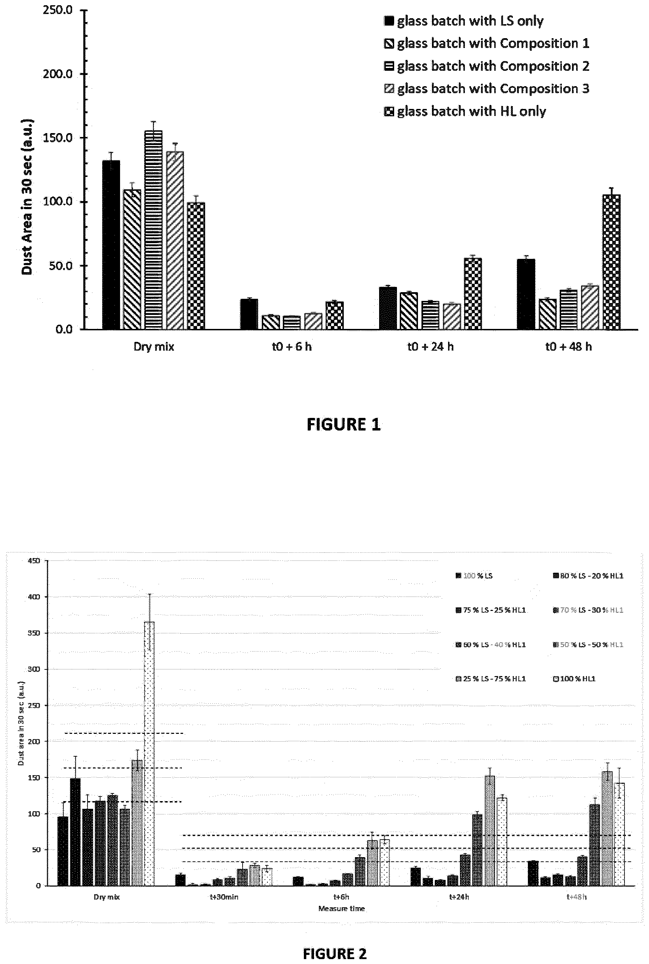

In the obtained mixture (dry mix or batch in a dry state), a sample of about 500 g was taken for analyses and dust emission measurements. Then, 3 wt% of water (45 g of water for 1.5 kg of batch) were added into the mixer and agitation was maintained during 5 additional minutes. The moisturized glass batches (or glass batch in a wet state) were then recovered and split into 3 samples of about same size and put in separate buckets closed with plastic lids. Those samples were used to measure dust emissions after 6 hours (from water addition), after 24 hours and after 48 hours, respectively. The dust areas measured are presented in the Figure 1.

As can be seen, the dust areas of the dry mixes are all rather equivalent and below 200 a.u. For the glass batches in a wet state, after 6, 24 and 48 hours of storage, they all have dust areas that are lower than 50 and even lower than 30 and that are systematically lower than the dust emissions measured for the glass batches made with only limestone (LS) or only hydrated lime (HL).

### Set #2

In this set of examples, glass batches were prepared by mixing the different raw materials and using varying amounts of a crushed limestone, LS and a first hydrated lime, HL1.

The targeted glass batch composition corresponds to a typical container glass composition and is the following: 71.9 % SiO₂, 12.8 % Na₂O, 1.2 % K₂O, 10.7 % CaO, 1.4 % MgO, 1.8 % Al₂O₃, 0.08 % Fe₂O₃ and 0.12 % SO₃.

The following raw materials have been mixed: silica sand, soda ash, dolomite, limestone (LS), hydrated lime (HL1), nepheline syenite and sodium sulfate. Their chemical composition and their total LOI (from room temperature up to 950°C or constant mass) are exposed in Table 3. Table 4 shows the main properties of the used crushed limestone (LS) and the used hydrated lime HL1.

In order to illustrate the partial replacement of limestone by hydrated lime in a glass batch (dolomite is added classically to bring magnesium), the amounts of LS and HL1 were varied in the glass batch, from no HL1 (then only LS) to no LS (then only HL1), with ratio HL1 /LS varying from 0 to 0.7. The different values used in this example are exposed at Table 5, together with the final amounts of each relative to the total glass batch, as well as the total CC and HC amounts in the glass batches made with these variable amounts of LS and HL1.

**Table 3**

| **Batch material** | **SiO₂** | **Na₂O** | **K₂O** | **CaO** | **MgO** | **Al₂O₃** | **Fe₂O₃** | **SO₃** | **LOI** |
|---|---|---|---|---|---|---|---|---|---|
| | % | % | % | % | % | % | % | % | % |
| Silica sand | 98.72 | 0.00 | 0.00 | 0.05 | 0.00 | 0.10 | 0.49 | 0.00 | 0.00 |
| Soda ash | 0.09 | 57.61 | 0.00 | 0.00 | 0.03 | 0.00 | 0.00 | 0.00 | 42.23 |
| Dolomite | 0.39 | 0.00 | 0.02 | 30.78 | 21.07 | 0.09 | 0.09 | 0.04 | 47.40 |
| Limestone LS | 0.21 | 0.00 | 0.00 | 55.32 | 0.43 | 0.04 | 0.06 | 0.01 | 43.90 |
| Hydrated time HL1 | 0.09 | 0.00 | 0.00 | 72.58 | 0.52 | 0.04 | 0.07 | 0.02 | 26.65 |
| Nepheline syenite | 55.60 | 7.20 | 8.70 | 1.44 | 0.00 | 25.80 | 0.37 | 0.00 | 0.00 |
| Sodium sulfate | 0.00 | 43.59 | 0.00 | 0.00 | 0.00 | 0.00 | 0.00 | 56.25 | 0.00 |

**Table 4**

| **Method** | **Product property** | **LS** | **HL1** | **HL2** |
|---|---|---|---|---|
| Screening | Retained 8 mm (%) | 0 | / | / |
| Screening | Retained 5 mm (%) | 0 | / | / |
| Screening | Retained 3 mm (%) | 0 | / | / |
| Screening | Retained 1 mm (%) | 8.9 | / | / |
| Screening | Passing 90 µm (%) | 6.6 | / | / |
| Laser | d₅₀ (µm) | / | 4.7 | 4.2 |
| Laser | d₉₀ (µm) | / | 43.7 | 42.3 |
| XRF | Total Ca as CaO (%) | 55.3 | 73.0 | 71.5 |
| TGA | Bound water, H₂O (%) | / | 23.6 | 21.0 |
| TGA | CO₂ (%) | / | 0.7 | 3.7 |
| XRF and TGA | CaO (%) | / | < 0.1 | 1.4 |
| XRF | Fe₂O₃ (ppm) | 610 | 940 | 1230 |

**Table 5**

| **Examples** | **in total amount of LS and HL1** | | **in batch** | | | | | |
|---|---|---|---|---|---|---|---|---|
| | % LS | % HL1 | % Dolomite | % LS | % HL1 | Total CC | Total HC | **HC/CC** |
| **Example 1 (ref)** | 100 | 0 | 5.34 | 13.02 | 0 | 18.36 | 0 | 0 |
| **Example 2 (INV)** | 80 | 20 | 5.39 | 9.88 | 2.47 | 15.27 | 2.47 | 0.16 |
| **Exemple 3 (INV)** | 75 | 25 | 5.4 | 9.14 | 3.05 | 14.54 | 3.05 | 0.21 |
| **Exemple 4 (INV)** | 70 | 30 | 5.41 | 8.43 | 3.61 | 13.84 | 3.61 | 0.26 |
| **Exemple 5 (INV)** | 60 | 40 | 5.43 | 7.04 | 4.70 | 12.47 | 4.70 | 0.38 |
| **Exemple 6 (INV)** | 50 | 50 | 5.45 | 5.73 | 5.73 | 11.18 | 5.73 | 0.51 |
| **Exemple 7 (INV)** | 25 | 75 | 5.49 | 2.7 | 8.11 | 8.19 | 8.11 | 0.99 |
| **Exemple 8 (ref)** | 0 | 100 | 5.53 | 0 | 10.23 | 5.53 | 10.23 | 1.85 |

Table 6 shows, as an illustration, the amounts of each raw materials in the test of a glass batch with the amount of HL1 corresponding to 40% of the total amount (LS + HL1), computed in order to reach the targeted glass batch composition.

**Table 6**

| **Batch material** | **Batch share (%)** |
|---|---|
| Silica sand | 58.81 |
| Soda ash | 18.06 |
| Dolomite | 5.43 |
| Limestone LS | 7.04 |
| Hydrated lime HL1 | 4.70 |
| Nepheline syenite | 5.90 |
| Sodium sulfate | 0.18 |

In the preparation of the glass batch of this set of examples, the different raw materials were all added independently into a planetary mixer, in amounts allowing to obtain 2 kg of every batch in a dry state. Mixing was carried out during 5 minutes and then, the blend was separated into 5 samples of 400 g each. 4 of these samples (i.e. 1600 g approximately) were put back into the mixer, whereas the last sample was used to measure the dust emission of the glass batch in a dry state. Then, 3 wt% of water, i.e. 48 g, were added in one shot during mixing to the 1600 g of dry batch to produce a glass bath in a wet state or moisturized batch. This wet batch was again separated into 4 samples of about 412 g each that were all put in separate buckets closed with plastic lids. Those samples were used to measure dust emissions after 30 minutes (from water addition), after 6 hours, after 24 hours and after 48 hours, respectively.

Figure 1 shows the dust emissions for all the glass batches, in dry and wet state after the different storage times. As can be seen, the glass batch containing only hydrated lime and no limestone emits a lot of dust before moisturization (dry batch), more precisely about 3.5 times more than the glass batch made with limestone only (reference, 100% LS). However, surprisingly, all the dry batches prepared with a replacement of LS by HL1 up to 40 % (i.e. 60 % LS + 40 % HL1), remain acceptable in terms of dust, in some case even with a dust emission close to the reference at 100% LS.

The wet batches, shortly after moisturizing, show a lot lower dust emission than the corresponding dry batches. Generally speaking, the dust emissions of all batches then increase again during storage of the wet batches, as during this storage, part of the free water is consumed by the hydration of Na₂CO₃ or lost by drying.

However, the dust area of the glass batches 80% LS - 20% HL1, 75% LS - 25% HL1, 70% LS - 30% HL1 and 60% LS - 40% HL1 remains, all along the storage time considered, below 50 and, surprisingly, around the value of the reference glass batch (100 % LS), either slightly above or very close or even below. One may have expected increased dust emissions of those batches based on the dust emissions measured for the batch made with hydrated lime only and no limestone (ref 100 % HL 1).

Therefore, this set of examples shows the synergy in terms of dust emissions when replacing partially limestone by hydrated lime in specific amounts in a glass batch. This advantageous effect on dust emissions therefore allows the use of hydrated lime in significantly large amounts as a replacement of limestone, without having the drawbacks usually associated with the use of oxides or hydroxides and while having the added value of using hydrated products instead of carbonated ones (reduced CO₂ emissions, increased pull (due to increased melting kinetics).

### Set #3

In this set of examples, similar glass batches as those of set#2, targeting the final same glass batch composition, were prepared with the same limestone LS but another hydrated lime, HL2.

The following same raw materials have been mixed : silica sand, soda ash, dolomite, limestone (LS), hydrated lime (HL2), nepheline syenite and sodium sulfate. Their chemical composition and their total LOI (from room temperature up to 950°C or constant mass) are exposed at Table 3. The main properties of HL2 can also be found at Table 4.

In order to illustrate the partial replacement of limestone by hydrated lime in a glass batch (dolomite is added classically to bring magnesium), the amounts of LS and HL2 were varied in the glass batch, from no HL2 (then only LS) to no LS (then only HL2). The different values used in this example are exposed at Table 7, together with the final amounts of each relative to the total glass batch and with the total CC and HC amounts in the different glass batches.

**Table 7**

| **Examples** | **in total amount of LS and HL2** | | **in batch** | | | | | |
|---|---|---|---|---|---|---|---|---|
| | % LS | % HL2 | % Dolomite | % LS | % HL2 | Total CC | Total HC | **HC/CC** |
| **Example 9** | 100 | 0 | 5.34 | 13.02 | 0 | 18.36 | 0 | 0 |
| **Example 10 (INV)** | 75 | 25 | 5.26 | 9.25 | 3.08 | 14.51 | 3.08 | 0.21 |
| **Exemple 11 (INV)** | 50 | 50 | 5.18 | 5.85 | 5.85 | 11.03 | 5.85 | 0.53 |
| **Exemple 12** | 0 | 100 | 5.04 | 0 | 10.63 | 5.04 | 10.63 | 2.11 |

Table 8 shows, as an illustration, the amounts of each raw materials in the test of a glass batch with the HL2 being equal to 50% of the total amount (LS + HL2), computed in order to reach the targeted glass batch composition.

**Table 8**

| **Batch material** | **Batch share (%)** |
|---|---|
| Silica sand | 59.05 |
| Soda ash | 18.15 |
| Dolomite | 5.18 |
| Limestone LS | 5.85 |
| Hydrated lime HL2 | 5.85 |
| Nepheline syenite | 5.90 |
| Sodium sulfate | 0.14 |

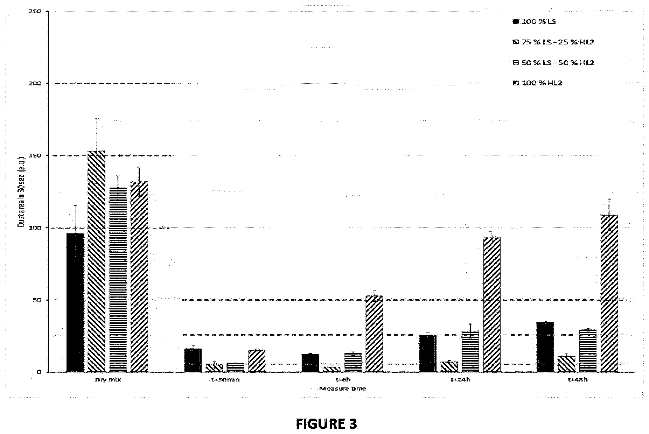

The preparation of the glass batches of this set of examples was the same as for set#2 and the results of the dust emissions are presented at Figure 3.

Again, one can see that glass batches containing the same amount of LS and HL2 are emitting low dust, even after 48 hours of wet storage, and surprisingly, even only as much dust or even less dust as a reference glass batch made with LS only (100 % LS).

Therefore, this set of examples shows also the synergy in terms of dust emissions when replacing partially limestone by hydrated lime in specific amounts in a glass batch. This advantageous effect on dust emissions therefore allows the use of hydrated lime in significantly large amounts as a replacement of limestone, without having the drawbacks usually associated with the use of oxides or hydroxides and while having the added value of using hydrated products instead of carbonated ones (reduced CO₂ emissions, increased pull (due to increased melting kinetics).

## Claims

1. Composition for its use as a raw material in a glass manufacturing process, comprising :
- hydrated lime and limestone; or
- hydrated dolime and dolomite; or
- hydrated lime, hydrated dolime, limestone and dolomite;
in such amounts that said composition comprises :
- 25 to 70 wt% of total calcium (expressed as CaO);
- 0 to 30 wt% of magnesium (expressed as MgO);
- 10 to 45 wt% of total carbonate (expressed as CO₂);
- 1 to 20 wt% of bound water (expressed as H₂O).

2. Composition according to claim 1, **characterized in that** it shows a dust emission defined by a Dust Area (a.u.) below 600, preferably below 500 and, more preferably, below 300, as measured on an amount of 50 grams of said composition in a dry state and with a measurement time of 30 seconds.

3. Composition according to claims 1 or 2, **characterized in that** it comprises hydrated lime and limestone in such amounts that said composition comprises:
- 50 to 70 wt% of total calcium (expressed as CaO);
- 0 to 5 wt% of magnesium (expressed as MgO);
- 10 to 40 wt% of total carbonate (expressed as CO₂);
- 1 to 20 wt% of bound water.

4. Composition according to any of claims 1 or 2, **characterized in that** it comprises hydrated dolime and dolomite in such amounts that said composition comprises:
- 25 to 40 wt% of total calcium (expressed as CaO);
- 20 to 30 wt% of magnesium (expressed as MgO);
- 10 to 45 wt% of total carbonate (expressed as CO₂);
- 1 to 20 wt% of bound water (expressed as H₂O).

5. Composition according to to any of claims 1 or 2, **characterized in that** it comprises hydrated lime, hydrated dolime, limestone and dolomite in such amounts that said composition comprises:
- 25 to 70 wt% of total calcium (expressed as CaO);
- 0 to 30 wt% of magnesium (expressed as MgO);
- 10 to 45 wt% of total carbonate (expressed as CO₂);
- 1 to 20 wt% of bound water (expressed as H₂O).

6. Composition according to any of the preceding claims, **characterized in that** it comprises 0.1 to 5 wt% of free water (expressed as H₂O).

7. Composition according to any of the preceding claims, **characterized in that** it comprises less than 2000 ppm, preferably less than 1800 ppm and, more preferably, less than 1500 ppm of iron (expressed as Fe₂O₃).

8. Composition according to any of the preceding claims, **characterized in that** it has a maximum particle size of 8 mm, preferably 5 mm and, more preferably, 3 mm.

9. Use of a composition according to claims 1 to 8, as a calcium or calcium-magnesium raw material in a glass manufacturing process.

10. Process of preparing a glass batch from glass raw materials, comprising a step of mixing the following raw materials to obtain said glass batch:
- silica sand,
- soda ash (namely sodium carbonate or Na₂CO₃),
- calcium and calcium-magnesium sources chosen amongst the following combinations:
- hydrated lime and limestone and dolomite; or
- hydrated dolime and dolomite and limestone; or
- hydrated lime, hydrated dolime, limestone and dolomite;
- optionally, one or more secondary raw materials;
the amounts of hydrated compound(s) (HC) and carbonate compound(s) (CC) in said glass batch being such that the weight ratio HC/CC ranges between 0.03 to 3, HC being defined as hydrated lime and/or hydrated dolime and CC being defined as limestone and dolomite.

11. Process according to the preceding claim, **characterized in that** said glass batch has a dust emission defined by a Dust Area (a.u.) below 250, preferably below 200 and, more preferably, below 150, as measured on 100 g of said glass batch in a dry state and with a measurement time of 30 seconds.

12. Process according to the claim 10 or 11, **characterized in that** said glass batch has a dust emission defined by a Dust Area (a.u.) below 100, preferably below 75 and, more preferably, below 50, as measured after 48 hours on 100 g of said glass batch in a wet state and with a measurement time of 30 seconds.

13. Process according to claims 10 to 12, **characterized in that** it comprises further a step of adding water in an amount ranging from above 0 to 5 wt% (expressed with respect to the total weight of said glass batch in a dry state), preferably from 0.1 to 5 wt%.

14. Process according to claims 10 to 13, **characterized in that** said hydrated compound(s) has/have a d₅₀ ranging between 3 and 20 µm, preferably between 4 and 15 µm and, more preferably, between 5 and 10 µm.

15. Use of a glass batch prepared according to claims 10 to 14, to feed a glass furnace.
